# FASCICULE DE BREVET EUROPEEN

(11) **EP 1 901 949 B1**
(45) Date de publication et mention de la délivrance du brevet: **16.03.2011**
(21) Numéro de dépôt: 06778695.4
(22) Date de dépôt: 28.06.2006
(51) Int. Cl.: B60S 1/34

(54) **DISPOSITIF D'ESSUYAGE D'UNE VITRE D'AUTOMOBILE COMPORTANT UN BALAI D'ESSUIE-GLACE A DEPLACEMENT LINEAIRE**
WISCHERVORRICHTUNG FÜR EINE KRAFTFAHRZEUGWINDSCHUTZSCHEIBE MIT EINEM LINEAR BEWEGLICHEN SCHEIBENWISCHER
WIPER DEVICE FOR A MOTOR VEHICLE WINDSCREEN PROVIDED WITH A LINEARLY MOVABLE WINDSCREEN WIPER

(30) Priorité: 08.07.2005 FR 0507349
(43) Date de publication de la demande: 26.03.2008
(73) Titulaire: PEUGEOT CITROËN AUTOMOBILES S.A., 78140 Vélizy Villacoublay (FR); Euramax Industries S.A., 49260 Montreuil-Bellay (FR)
(72) Inventeur: JEUFFE, Gérard, F-78810 Feucherolles (FR); KUGENER, Olivier, F-79290 Brion Pres Thouet (FR); HERVOT, Yannick, F-49260 Montreuil Bellay (FR); DOUCET, Yannick, F-49400 Bagneux (FR); DEQUIROT, Olivier, F-79290 Saint Martin de Sanzay (FR)
(74) Mandataire: Jacobson, Claude
(86) Numéro de dépôt international: PCT/FR2006/001501
(87) Numéro de publication internationale: WO 2007/006884

(56) Documents cités:
- DE-A1- 3 902 071
- DE-C- 662 718
- FR-A- 607 933
- US-A- 3 428 996
- US-A- 3 667 081

## Description

La présente invention est relative à un dispositif d'essuyage d'une vitre comprenant un balai d'essuie-glace à déplacement linéaire. Un tel dispositif peut être utilisé notamment pour essuyer les vitres d'une automobile et en particulier, la lunette arrière.

On connaît des dispositifs d'essuyage de vitres pour véhicule automobile, comprenant un balai d'essuie-glace à déplacement linéaire porté par un chariot guidé par un rail de guidage et entraîné par un moyen de transmission relié à un moyen d'entraînement.

On connaît en particulier des dispositifs dans lesquels le chariot qui porte le balai d'essuie-glace est entraîné par une vis sans fin qui est évidemment droite, ce qui nécessite des dispositifs particuliers pour permettre au balai d'essuie-glace de rester en permanence bien appliqué contre la vitre, en particulier lorsque celle-ci présente un certain galbe.

Ces dispositifs à vis sans fin peuvent être aussi bien avec une vis sans fin à filetage unique avec une vis sans fin à double filetage. L'intérêt des vis sans fin à double filetage est que ces vis peuvent être entraînées par un moteur qui tourne dans un seul sens, l'inversion du mouvement de l'essuie-glace lorsque celui-ci arrive en bout de vis, est réalisée par un dispositif qui permet de faire passer l'entraînement d'un filetage dans un sens à un filetage dans le sens opposé.

De tels dispositifs présentent l'inconvénient d'être compliqués et d'être relativement encombrants.

On connaît également des dispositifs dans lesquels le chariot qui porte le balai d'essuie-glace est entraîné par un câble sans fin soutenu par deux poulies situées à chacune des extrémités d'un rail de guidage, les poulies étant entrainées par un moteur. Un tel dispositif présente l'inconvénient de nécessiter des moyens de mise en tension du câble de façon à assurer en permanence une bonne qualité de l'entraînement du câble par les poulies sur lesquelles il s'appuie.

De tels dispositifs sont également compliqués et encombrants, en particulier lorsqu'ils doivent s'adapter à une vitre qui présente un certain galbe.

Par DE 39 02 071, on connaît également des dispositifs dans lesquels le chariot est entraîné par un moyen de transmission souple coulissant dans une goulotte longitudinale du rail de guidage.

Le but de la présente invention est de remédier à ces inconvénients en proposant un dispositif d'essuyage d'une vitre comprenant un balai d'essuie-glace à déplacement linéaire qui puisse être manipulé facilement avec un dispositif peu encombrant s'adaptant à toutes formes de vitres et sans qu'il y ait basculement du support du balai.

A cet effet, l'invention a pour objet un dispositif d'essuyage d'une vitre comprenant un balai d'essuie-glace à déplacement linéaire porté par un chariot guidé par un rail de guidage, relié à un moyen de transmission entraîné par un moyen d'entraînement. Le rail de guidage comporte au moins une goulotte longitudinale de maintien d'un élément du moyen de transmission et le moyen de transmission est souple et comporte un élément qui peut coulisser dans la goulotte longitudinale du rail de guidage. Le rail de guidage comporte, en outre, au moins une gorge longitudinale de guidage et le chariot portant le balai d'essuie-glace comporte au moins un premier patin solidaire d'une extrémité de l'élément du moyen de transmission, coulissant dans la goulotte du rail de guidage, et au moins un deuxième patin coulissant dans une gorge de guidage longitudinale du rail de guidage. la goulotte et la gorge sont orientées à angle droit l'une par rapport à l'autre.

De préférence, le moyen de transmission est une crémaillère souple qui peut être constituée d'un câble souple comprenant une âme autour de laquelle un fil est enroulé en spirale, le câble souple coulissant dans une gaine dont une extrémité est solidaire d'une extrémité de la goulotte longitudinale du rail de guidage, l'autre extrémité étant solidaire d'une sortie du moyen d'entraînement, le câble souple étant relié à une de ses extrémités au chariot.

Le moyen d'entraînement peut comprendre une roue dentée entraînée par un moteur électrique, ladite roue dentée coopérant avec le fil enroulé en spirale autour de l'âme du câble souple.

Le dispositif peut comprendre également des moyens de commande du mouvement du chariot portant le balai d'essuie-glace.

De préférence, le deuxième patin comporte au moins un moyen de rattrapage de jeu constitué d'au moins une lamelle élastique destinée à coopérer avec une face latérale de la gorge de guidage.

Le dispositif peut être monté sur un véhicule automobile pour essuyer la vitre d'une lunette arrière, le rail de guidage étant, de préférence, disposé au dessus de la lunette arrière et ayant une forme qui épouse le galbe de la lunette arrière,

Le moyen d'entraînement est, par exemple, disposé en dessous de la lunette arrière, sous la paroi externe de la partie de carrosserie qui comporte la lunette arrière.

L'invention concerne également un véhicule automobile qui comporte au moins un dispositif d'essuyage d'une vitre.

L'invention va maintenant être décrite de façon plus précise mais non limitative en regard des figures annexées dans lesquelles :
- la figure 1 est une vue en perspective d'un dispositif d'essuyage d'une vitre d'automobile,

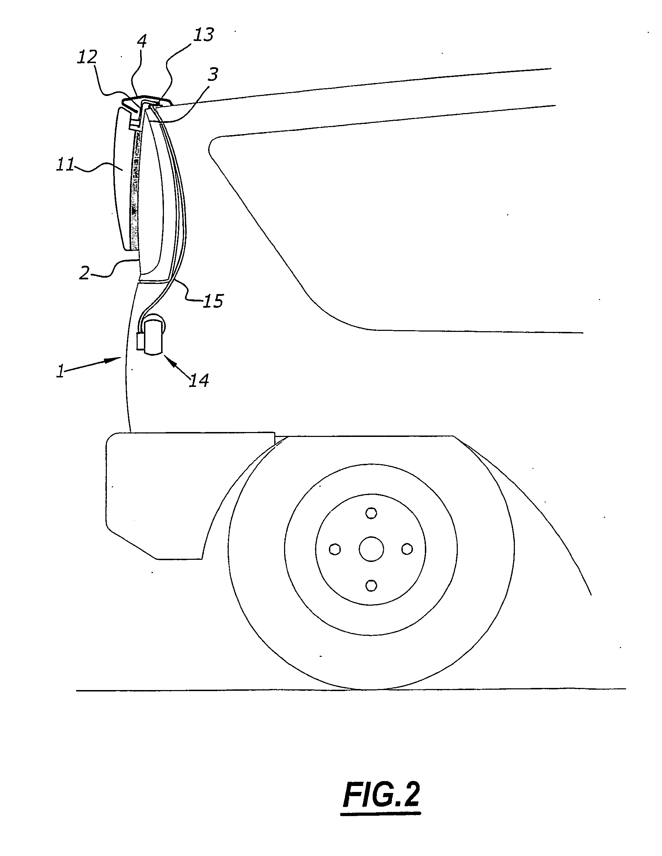

- la figure 2 est une vue de profil d'un arrière d'une automobile équipé d'un dispositif d'essuyage de la vitre de la lunette arrière,
- la figure 3 est une vue en perspective du principe d'une crémaillère souple,

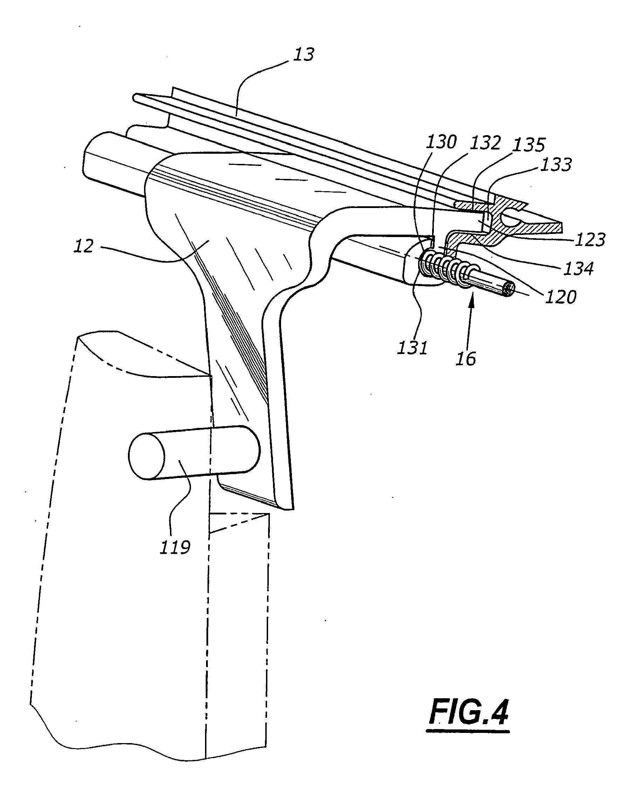

- la figure 4 est une vue en perspective d'un chariot support d'un balai d'essuie-glace monté dans un rail de guidage,
- la figure 5 est une vue en perspective d'un chariot de support de balai d'essuie-glace à déplacement linéaire.

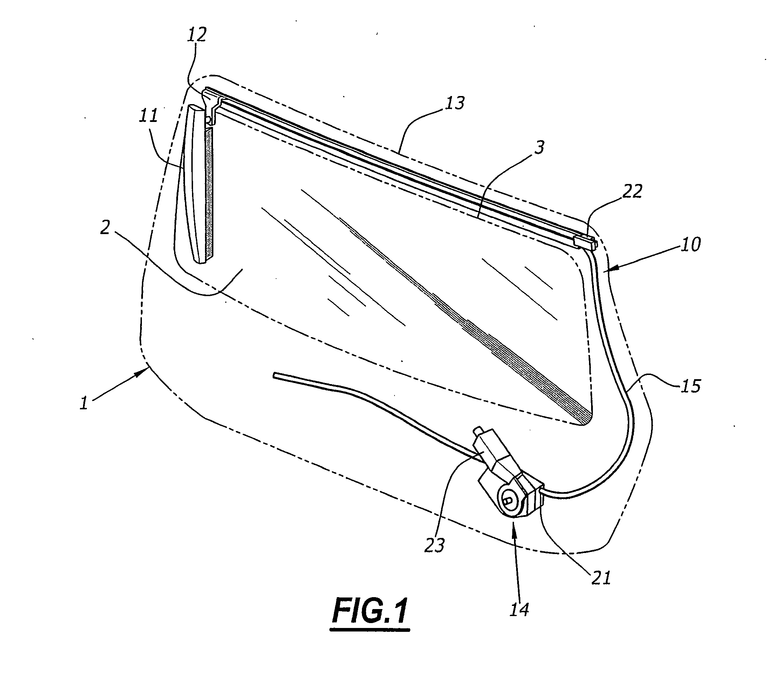

La partie arrière d'un véhicule automobile représentée à la figure 1 est par exemple un hayon repéré généralement par 1 dont l'enveloppe extérieure a été retirée, et qui comporte une lunette arrière 2. Dans ce hayon est disposé un dispositif d'essuyage de la glace repéré généralement par 10, qui comporte un balai d'essuie-glace 11 connu en lui-même à déplacement linéaire, porté par un chariot 12 qui coulisse dans un rail de guidage 13 s'étendant le long de la bordure supérieure 3 de la lunette arrière 2. Le chariot 12 est entraîné par un moyen d'entraînement repéré généralement par 14 qui entraîne un moyen de transmission 15 relié au chariot 12. On notera que le moyen de transmission 15 s'étend notamment entre une sortie 21 du moyen d'entraînement 14 et une extrémité 22 du rail de guidage 13. Comme on le verra ultérieurement, le moyen de transmission 15 comporte un élément qui coulisse à l'intérieur d'une goulotte de guidage prévue dans le rail de guidage13.

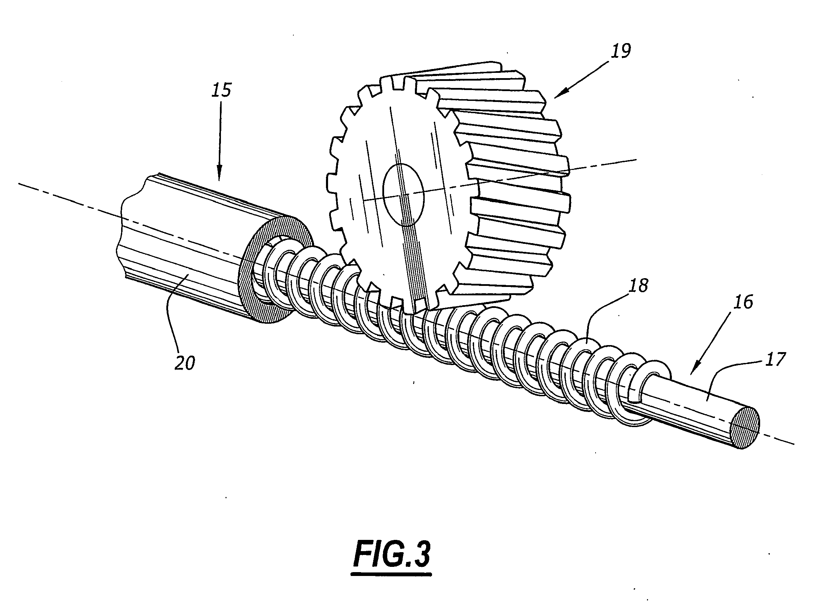

Comme on le voit sur la figure 3, le moyen de transmission repéré généralement par 15, est une crémaillère souple constituée d'un câble repéré généralement par 16 qui comporte une âme centrale 17 autour de laquelle est enroulé en spirale un fil métallique 18, ou plus généralement un toron, que l'on désignera d'une façon générale par fil.

Le câble repéré généralement par 16 coulisse à l'intérieur d'une gaine 20. La gaine 20 est reliée de façon rigide d'une part, à une sortie 21 du moyen d'entraînement et d'autre part, à une extrémité 22 d'entrée dans une goulotte du rail de guidage 13. A l'intérieur du moyen d'entraînement 14, le câble 16 coopère avec une roue dentée 19 par l'intermédiaire de l'enroulement en spirale 18. La roue dentée 19 qui est entraînée par un moto réducteur 23 permet de déplacer longitudinalement le câble 16. Le câble 16 dont une extrémité est fixée au chariot 12, est maintenu dans une gaine dont les deux extrémités sont reliées à des points fixes, afin de pouvoir assurer un déplacement en exerçant un effort dans un sens ou dans l'autre pour entraîner le chariot 12. On notera qu'une telle crémaillère souple est connue en elle-même de l'homme du métier.

Le chariot 12 qui porte le balai d'essuie-glace par l'intermédiaire d'un moyen de fixation 119 du balai d'essuie-glace comporte un premier patin 120 qui coulisse dans une goulotte longitudinale 130 du rail de guidage qui comporte une partie cylindrique 131 dans laquelle le câble 16 du moyen d'entraînement qui est fixé au chariot 12, peut coulisser de façon à entraîner le chariot dans un mouvement de translation dans un sens ou dans l'autre.

La goulotte 130 comporte également une fente longitudinale 132, s'étendant sur toute la longueur du rail de guidage et permettant le passage du patin 120 du chariot support 12.

Le chariot support de balai d'essuie-glace 12, comporte également un deuxième patin 123 qui coulisse dans une gorge de guidage 133 s'étendant sur toute la longueur du rail de guidage 13.

La goulotte 130 comme on l'a vu sert à maintenir le câble de transmission 16 de telle sorte qu'il peut fonctionner aussi bien en traction qu'en compression.

La gorge de guidage 133, a pour fonction de maintenir en position le chariot porte balai d'essuie-glace 12 de façon à l'empêcher de basculer.

De préférence la goulotte 130 et la gorge 133 sont orientées à angle droit l'une par rapport à l'autre, ce qui permet, par les réactions de leur bordure sur les deux patins, d'assurer un guidage complet du chariot 12 en ne laissant qu'un degré de liberté correspondant à la translation le long du rail.

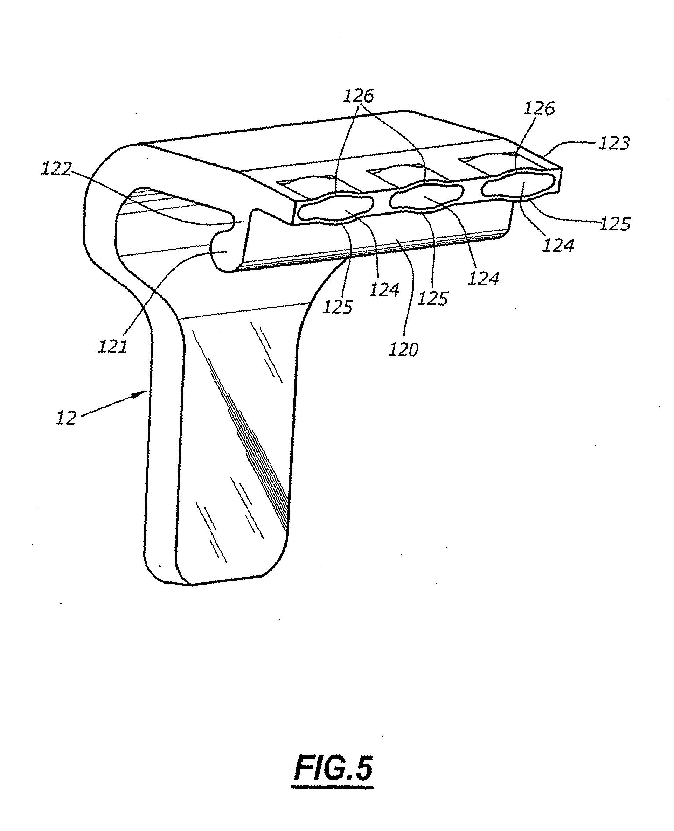

Comme on le voit sur la figure 5 qui représente en perspective un chariot 12 agrandi, le patin 120 comporte une tête cylindrique 121 raccordée au corps du patin par une nervure plus étroite 122. La tête cylindrique 121 qui glisse dans la partie cylindrique de la goulotte de guidage, assure d'une part la liaison avec le câble 16 du moyen de transmission, et d'autre part, le guidage longitudinal du chariot 12. En effet, le mouvement du chariot est piloté par le glissement de cette tête 121 à l'intérieur de la partie cylindrique 131 de la goulotte de guidage 130. La nervure 122, qui est une nervure de liaison avec le corps du chariot 12, coulisse à travers la fente 132, qui simplement assure le passage de la nervure 122.

Le deuxième patin 123 qui coulisse dans la gorge de guidage 133 coopère avec les faces latérales 134 et 135 de la goulotte et ainsi empêche le basculement du chariot 12. Afin de rester en permanence bien maintenu dans la gorge de guidage longitudinale 133, le patin 123 comporte des éléments de rattrapage de jeu 124, constitués de deux languettes élastiques 125 et 126 qui s'étendent en saillie vers l'extérieur des parois latérales du patin. Ces éléments élastiques 125 et 126 viennent en contact avec les faces latérales 134 et 135 de la gorge de guidage 133.

Bien évidemment, le dispositif comporte également des moyens de commande, non représentés, que l'homme du métier connaît et sait réaliser. En particulier, des moyens de détection de la présence du chariot aux extrémités du rail, de façon à commander les inversions de sens de déplacement.

Le dispositif comporte des moyens de maintien du balai d'essuie-glace sur le chariot porte-balai d'essuie-glace ainsi que les moyens qui permettent d'appliquer le balai d'essuie-glace contre la vitre à essuyer qui ne sont pas décrits car ils sont connus en eux-mêmes de l'homme du métier.

Le dispositif qui vient d'être décrit et qui consiste essentiellement à utiliser une crémaillère souple pour déplacer un chariot coulissant dans un rail de guidage et qui porte un balai d'essuie-glace, peut être utilisé pour essuyer toute vitre de véhicule automobile.

Lorsque le dispositif est utilisé pour essuyer la vitre de la lunette arrière du véhicule automobile, le rail de guidage du chariot du balai d'essuie-glace qui se déplace latéralement le long de la rive supérieure 3 de la lunette arrière 2, peut être dissimulé sous un béquet 4 qui s'étend latéralement sur la partie arrière du véhicule.

Enfin, le moyen de déplacement du balai d'essuie-glace étant constitué d'une crémaillère souple coulissant dans un rail pouvant avoir une centaine de courbures, le dispositif est bien adapté à l'essuyage de vitres galbées.

## Revendications

1. Dispositif d'essuyage d'une vitre (2) comprenant un balai d'essuie-glace (11) à déplacement linéaire porté par un chariot (12) guidé par un rail de guidage (13), relié à un moyen de transmission (15) entraîné par un moyen d'entraînement (14), dans lequel le rail de guidage (13) comporte au moins une goulotte longitudinale (130) de maintien d'un élément (16) du moyen de transmission (15) et le moyen de transmission est souple et comporte un élément (16) qui peut coulisser dans la goulotte longitudinale (130) du rail de guidage (13), le rail de guidage (13) comportant, en outre, au moins une gorge longitudinale (133) de guidage, le chariot (12) portant le balai d'essuie-glace (11) comportant au moins un premier patin (120) solidaire d'une extrémité de l'élément (16) du moyen de transmission (15), coulissant dans la goulotte (130) du rail de guidage, et au moins un deuxième patin (123) coulissant dans une gorge de guidage longitudinale (133) du rail de guidage (13), **caractérisé en ce que** la goulotte (130) et la gorge (133) sont orientées à angle droit l'une par rapport à l'autre.

2. Dispositif selon la revendication 1, **caractérisé en ce que** le moyen de transmission (15) est une crémaillère souple.

3. Dispositif selon la revendication 2, **caractérisé en ce que** la crémaillère souple (15) est constituée d'un câble souple (16) comprenant une âme (17) autour de laquelle un fil (18) est enroulé en spirale, le câble souple (16) coulissant dans une gaine (20) dont une extrémité (22) est solidaire d'une extrémité de la goulotte s'étendant le long du rail de guidage (13), l'autre extrémité étant solidaire d'une sortie (21) du moyen d'entraînement, le câble souple (16) étant relié à une de ses extrémités au chariot (12).

4. Dispositif selon la revendication 3, **caractérisé en ce que** le moyen d'entraînement (14) comprend une roue dentée (19) entraînée par un moteur électrique, ladite roue dentée (19) coopérant avec le fil (18) enroulé en spirale autour de l'âme (17) du câble souple (16).

5. Dispositif selon la revendication 4, **caractérisé en ce qu'**il comprend, en outre, des moyens de commande du mouvement du chariot (12) portant le balai d'essuie-glace (11).

6. Dispositif selon l'une quelconque des revendications 1 à 5, **caractérisé en ce que** le deuxième patin (123) comporte au moins un moyen de rattrapage de jeu (124) constitué d'au moins une lamelle élastique (125, 126) destinée à coopérer avec une face latérale (134, 135) de la gorge de guidage (133).

7. Dispositif selon l'une quelconque des revendications 1 à 6, **caractérisé en ce qu'**il est monté sur un véhicule automobile pour essuyer la vitre (2) d'une lunette arrière.

8. Dispositif selon la revendication 7, **caractérisé en ce que** le rail de guidage (13) est disposé au dessus de la lunette arrière (2) et a une forme qui épouse le galbe de la lunette arrière

9. Dispositif selon la revendication 8, **caractérisé en ce que** le moyen d'entraînement (14) est disposé en dessous de la lunette arrière (2), sous la paroi externe de la partie de carrosserie qui comporte la lunette arrière.

10. Véhicule automobile **caractérisé en ce qu'**il comporte au moins un dispositif d'essuyage d'une vitre selon l'une quelconque des revendications 1 à 8.

## Claims

1. Window-wiping device (2) comprising a linear displacement windscreen wiper (11) carried by a carriage (12) guided by a guide rail (13), connected to a transmission means (15) driven by a driving means (14), in which the guide rail (13) includes at least one longitudinal channel (130) maintaining an element (16) of the transmission means (15) and the transmission means is flexible and includes an element (16) which can slide in the longitudinal channel (130) of the guide rail (13), the guide rail (13) including, in addition, at least one longitudinal guide groove (133), the carriage (12) carrying the windscreen wiper (11) including at least a first shoe (120) integral with one end of the element (16) of the transmission means (15), sliding in the channel (130) of the guide rail, and at least a second shoe (123) sliding in a longitudinal guide groove (133) of the guide rail (13), **characterised in that** the channel (130) and the groove (133) are oriented at right angles in relation to one another.

2. Device according to claim 1, **characterised in that** the transmission means (15) is a flexible rack.

3. Device according to claim 2, **characterised in that** the flexible rack (15) consists of a flexible cable (16) comprising a core (17) around which a cord (18) is spirally wound, the flexible cable (16) sliding in a sheath (20), one end of which (22) is integral with one end of the channel extending along the guide rail (13), the other end being integral with an outlet (21) of the driving means, the flexible cable (16) being connected at one of its ends to the carriage (12).

4. Device according to claim 3, **characterised in that** the driving means (14) comprises a toothed wheel (19) driven by an electric motor, the said toothed wheel (19) cooperating with the cord (18) spirally wound around the core (17) of the flexible cable (16).

5. Device according to claim 4, **characterised in that** it comprises, in addition, means of control of the movement of the carriage (12) carrying the windscreen wiper (11).

6. Device according to any one of claims 1 to 5, **characterised in that** the second shoe (123) includes at least one clearance compensation means (124) consisting of at least one elastic strip (125, 126) intended to cooperate with a lateral face (134, 135) of the guide groove (133).

7. Device according to any one of claims 1 to 6, **characterised in that** it is mounted on an automotive vehicle to wipe the glass (2) of a rear window.

8. Device according to claim 7, **characterised in that** the guide rail (13) is disposed above the rear window (2) and has a form that matches the curvature of the rear window.

9. Device according to claim 8, **characterised in that** the driving means (14) is disposed below the rear window (2), below the external wall of the part of the bodywork that includes the rear window.

10. Automotive vehicle, **characterised in that** it includes at least one means of wiping a window according to any one of claims 1 to 8.

## Patentansprüche

1. Vorrichtung zum Wischen einer Scheibe (2), aufweisend ein Scheibenwischerblatt (11) mit Linearbewegung, das von einem Schlitten (12) getragen wird, der von einer Führungsschiene (13) geführt wird und der an ein Übertragungsmittel (15) angeschlossen ist, das von einem Antriebsmittel (14) angetrieben wird, wobei die Führungsschiene (13) mindestens eine längsverlaufende Rinne (130) zum Halten eines Elements (16) des Übertragungsmittels (15) aufweist und das Übertragungsmittel flexibel ist und ein Element (16) aufweist, das in der längsverlaufenden Rinne (130) der Führungsschiene (13) gleiten kann, wobei die Führungsschiene (13) darüber hinaus mindestens eine längsverlaufende Führungsnut(133) aufweist, wobei der Schlitten (12) das Scheibenwischerblatt (11) trägt, das aufweist:
mindestens einen ersten Gleitschuh (120), der mit einem Ende des Elements (16) des Übertragungsmittels (15) einstückig ist, der in der Rinne (130) der Führungsschiene gleitet, und mindestens einen zweiten Gleitschuh (123), der in einer längsverlaufenden Führungsnut (133) der Führungsschiene (13) gleitet, **dadurch gekennzeichnet, dass** die Rinne (130) und die Nut (133) im rechten Winkel zueinander ausgerichtet sind.

2. Vorrichtung gemäß Anspruch 1, **dadurch gekennzeichnet, dass** das Übertragungsmittel (15) eine flexible Zahnstange ist.

3. Vorrichtung gemäß Anspruch 2, **dadurch gekennzeichnet, dass** die flexible Zahnstange (15) aus einem flexiblen Kabel (16) gebildet ist, das einen Kern (17) aufweist, um den ein Draht (18) spiralförmig aufgewickelt ist, wobei das flexible Kabel (16) in einem Mantel (20) gleitet, dessen eines Ende (22) mit einem Ende der Rinne, die sich entlang der Führungsscheine (13) erstreckt, einstückig ist, und dessen anderes Ende mit einem Ausgang (21) des Antriebsmittels einstückig ist, wobei das flexible Kabel (16) mit einem seiner Enden an den Schlitten (12) angeschlossen ist.

4. Vorrichtung gemäß Anspruch 3, **dadurch gekennzeichnet, dass** das Antriebsmittel (14) ein Zahnrad (19) aufweist, das von einem Elektromotor angetrieben wird, wobei das Zahnrad (19) mit dem spiralförmig um den Kern (17) des flexiblen Kabels (16) aufgewickelten Draht (18) zusammenwirkt.

5. Vorrichtung gemäß Anspruch 4, **dadurch gekennzeichnet, dass** sie ferner Steuermittel zum Bewegen des Schlittens (12) aufweist, der das Scheibenwischerblatt (11) trägt.

6. Vorrichtung gemäß einem der Ansprüche 1 bis 5, **dadurch gekennzeichnet, dass** der zweite Gleitschuh (123) mindestens ein Spielbeseitigungsmittel (124) aufweist, das aus mindestens einer elastischen Lamelle (125, 126) gebildet ist, die dazu bestimmt ist, mit einer Seitenfläche (134, 135) der Führungsnut (133) zusammenzuwirken.

7. Vorrichtung gemäß einem der Ansprüche 1 bis 6, **dadurch gekennzeichnet, dass** sie an einem Kraftfahrzeug montiert ist, um die Scheibe (2) eines Rückfensters zu wischen.

8. Vorrichtung gemäß Anspruch 7, **dadurch gekennzeichnet, dass** die Führungsschiene (13) über dem Rückfenster (2) angeordnet ist und eine Form aufweist, die zu der Rundung des Rückfensterns passt.

9. Vorrichtung gemäß Anspruch 8, **dadurch gekennzeichnet, dass** das Antriebsmittel (14) unter dem Rückfenster (2) unter der äußeren Wand des Teils der Karosserie angeordnet ist, der das Rückfenster aufweist.

10. Kraftfahrzeug, **dadurch gekennzeichnet, dass** es mindestens eine Scheibenwischervorrichtung gemäß einem der Ansprüche 1 bis 8 aufweist.
